# EUROPÄISCHE PATENTSCHRIFT

(11) **EP 2 304 259 B1**
(45) Veröffentlichungstag und Bekanntmachung des Hinweises auf die Patenterteilung: **08.01.2014**
(21) Anmeldenummer: 09776034.2
(22) Anmeldetag: 30.07.2009
(51) Int. Cl.: F16C 37/00

(54) **LAGERRING UND VERFAHREN ZUM KÜHLEN EINES LAGERRINGS**
BEARING RING AND METHOD FOR COOLING A BEARING RING
BAGUE DE PALIER ET PROCÉDÉ DE REFROIDISSEMENT D'UNE BAGUE DE PALIER

(30) Priorität: 02.08.2008 DE 102008036196
(43) Veröffentlichungstag der Anmeldung: 06.04.2011
(73) Patentinhaber: MTU Aero Engines AG, 80995 München (DE)
(72) Erfinder: FLOUROS, Michael, 80686 München (DE)
(86) Internationale Anmeldenummer: PCT/DE2009/001064
(87) Internationale Veröffentlichungsnummer: WO 2010/015233

(56) Entgegenhaltungen:
- WO-A-2004/104434
- DE-A1-102005 029 075
- GB-A- 2 111 136
- GB-A- 2 187 239
- US-A- 969 763
- US-A- 2 744 796
- US-B1- 6 293 703

## Beschreibung

Die vorliegende Erfindung betrifft einen Lagerring gemäß dem Oberbegriff des Anspruchs 1 sowie ein Verfahren zum Kühlen eines Lagerrings gemäß dem Oberbegriff des Anspruchs 4.

Herkömmliche Lagerringe werden durch ein Ölgemisch sowohl geschmiert als auch gekühlt, wobei das Ölgemisch (Schmieröl) direkt oder indirekt in das Lager bzw. das rotierende System des Lagerrings gespritzt wird. Das verwendete Schmieröl wird dabei sehr heiß, so dass eine Gefahr der Verkokung des Schmieröls und somit der Verstopfung der Schmierölleitungen besteht. Weiterhin wird zur Kühlung des Lagerrings eine hohe Menge Schmieröl benötigt, um bei einem intensiven Betrieb des Lagerrings mit dem Lager die entstehende Hitze ausreichend schnell abführen zu können. Wird die durch das Lager erzeugte Hitze nicht ausreichend schnell abgekühlt, tritt eine Beschädigung des Lagerrings ein. Die schnelle Abfuhr des Schmieröls erfordert zusätzlich große und teuere Kühler.

Das gattungsgemäße Dokument DE 10 2005 029 075 A1 betrifft eine Anordnung zur Lagerung eines Maschinenteils mittels mindestens eines Wälzlagers, dessen Außenring in eine Bohrung im Maschinenteil eingesetzt ist, wobei am Außenumfang des Außenrings und/oder in der Bohrung des Maschinenteils mindestens eine wendelförmig verlaufende Nut eingearbeitet ist. Dabei besteht die Aufgabe darin, eine spannungsfreie Lagerung zu schaffen und auch Passungsrost zu vermeiden. Die mindestens eine Nut dient zur Führung von Öl, konkret von Schmieröl. Es gibt hier keinen Hinweis auf eine Kühlfunktion der Nut.

Das Dokument US 6 293 703 B1 betrifft eine Lageranordnung für eine Werkzeugmaschinenspindel mit zwei axial beabstandeten, gegeneinander verspannten Wälzlagern. Dabei sind die Außenringe der Wälzlager über eine Distanzbuchse (outer collar 13) verspannt. Gemäß Figur 3 dieses Dokuments ist die Distanzbuchse mit einem spiralförmigen Kühlmittelkanal versehen. Gemäß Figur 4 ist ein beide Wälzlager aufnehmendes Gehäuseelement (coolant housing 35) auf seiner Außenseite mit einem spiralförmigen Kühlmittelkanal versehen. Eine direkte Kühlung der Lageraußenringe ist hier nicht offenbart.

Es ist daher die Aufgabe der vorliegenden Erfindung, zusätzlich zu einer optimalen Schmierung eine besonders effektive Kühlung für einen Lagerring zu schaffen.

Diese Aufgabe wird durch einen Lagerring mit den Merkmalen des Anspruchs 1 sowie ein Verfahren mit den Schritten des Anspruchs 4 gelöst. Weitere günstige Ausführungsformen der Erfindung ergeben sich aus den abhängigen Patentansprüchen.

Die vorliegende Erfindung geht aus von einem Lagerring, der eine einer Lagerringdrehachse zugewandte Innenseite und eine der Lagerringdrehachse abgewandte Außenseite aufweist, wobei an der Außenseite des Lagerrings zumindest ein Kühlmittelkanal angeordnet ist, der einen hydraulischen Durchmesser von zumindest Imm und eine Länge von mindestens 2 Windungen aufweist. Erfindungsgemäß weist der Lagerring einen Schmiermittelkanal zum Einleiten von Schmiermittel in das Lager auf, wobei der Schmiermittelkanal gegenüber dem Kühlmittelkanal fluiddicht abgedichtet ist.

Ferner schafft die vorliegende Erfindung ein Verfahren zum Kühlen eines Lagerrings, der eine einer Lagerringdrehachse zugewandte Innenseite und eine der Lagerringdrehachse abgewandte Außenseite aufweist, wobei an der Außenseite des Lagerrings zumindest ein Kühlmittelkanal angeordnet ist und wobei das Verfahren die folgenden Schritte aufweist:
- Zuführen (42) von Kühlmittel in den Kühlmittelkanal (14) des Lagerrings (10);
- Abführen (44) von Kühlmittel aus dem Kühlmittelkanal (14) des Lagerrings (10), wobei der Kühlmittelkanal einen hydraulischen Durchmesser von zumindest 1 Millimeter und eine Länge von mindestens zwei Windungen aufweist; und
- Einleiten von Schmiermittel in den Lagerring (10) über einen Schmiermittelkanal, wobei der Schmiermittelkanal gegenüber dem Kühlmittelkanal (14) fluiddicht abgedichtet ist.

Die vorliegende Erfindung bietet den Vorteil, dass ein Schmieröl mit besonders guten Schmiereigenschaften verwendet werden kann, so dass durch die effektivere Kühlwirkung die Schmierölmenge auf ein Minimum reduziert werden kann. Hierdurch tritt bedeutend weniger Churning auf und das Verhältnis von Hitze-zu-Öl lässt sich um 30 bis 40 Prozent reduzieren. Durch die wesentlich größere Fläche auf der Außenseite des Lagerrings sowie die Wärmeleitung durch den Lagerring treten auch keine derart hohen Öltemperaturen auf, wie sie bei der direkten oder indirekten Einspritzung des Schmieröls in das rotierende System oder Teile davon zu erwarten sind. Somit können die Kühler für das Schmieröl auch kleiner ausgelegt werden und eine Verkokungs- und Feuergefahr kann verringert werden. Insgesamt ergibt sich dadurch auch eine Erhöhung der Lebensdauer der beweglichen Teile des Lagerrings.

Ferner ermöglicht diese Erfindung durch den Kühlmittelfluss zwischen Außenring und Gehäuse die Operation des Systems als Dämpfer (Squeeze Film Dämpfer).

Dabei ist der Kühlmittelkanal auf der Außenseite in das Material des Lagerrings eingebettet. Dies stellt eine optimale Wärmeübertragung von den reibenden, gleitenden oder rotierenden Teilen des Lagerrings zum Kühlmittelkanal sicher, die nicht durch eine Klebe- oder Schraubverbindung oder Ähnlichem gestört ist.

Weiterhin ist der Kühlmittelkanal spiralförmig um die Außenseite des Lagerrings angeordnet. Hierdurch kann vorteilhaft eine möglichst große Wärmeaufnahmefläche um einen schmalen Lagerring sichergestellt werden, so dass eine optimale Wärmeabfuhr gewährleistet ist.

Der Kühlmittelkanal weist einen hydraulischen Durchmesser von zumindest 1 mm aufweisen. Dies stellt vorteilhaft sicher, dass der Durchmesser des Kühlmittelkanals ausreichend groß ist, um einerseits keinen zu großen Flusswiderstand zu bilden und andererseits auch bei einem Auftreten von kleinen Partikeln im Kühlmittel bzw. dem Kühlöl nicht sofort zu verstopfen.

In einer bevorzugten Ausführungsform der Erfindung weist der Kühlmittelkanal eine Gesamtlänge auf der Außenseite des Lagerrings auf, die höchstens dem 20-fachen des Durchmessers des Lagerrings entspricht. Dies stellt vorteilhaft sicher, dass sich das Kühlmittel nicht zu stark erhitzt, so dass es auch bei der Verwendung von Öl als Kühlmittel nicht zu einer Verkokung und damit zu einer Verstopfung des Kühlmittelkanals kommen kann. Auch kann durch die Verwendung von Kühlmittelkanälen von einer maximalen Länge sichergestellt werden, dass lediglich kleine Kühlmittelkühler vorgesehen werden müssen.

Gemäß der vorliegenden Erfindung weist der Lagerring einen Schmiermittelkanal zum Einleiten von Schmiermittel in das Lager auf, wobei der Schmiermittelkanal gegenüber dem Kühlmittelkanal fluiddicht abgedichtet ist. Dies ermöglicht die komplikationslose Verwendung von getrennten Schmier- und Kühlmitteln, so dass auch eine optimale Anpassung der jeweils erforderlichen Eigenschaften, speziell der Schmier- bzw. Kühleigenschaften individuell eingestellt werden kann. Es muss nicht mehr ein Kompromiss zwischen Kühl- und Schmiereigenschaften des Öls eingegangen werden. Weiterhin kann hierdurch auch eine Minimierung des benötigten Schmieröls sichergestellt werden, welches dann temperaturbeständig gegenüber hohen Lagerringtemperaturen ausgewählt werden kann.

Auch kann eine Lagervorrichtung vorgesehen sein, die einen Treibstofftank zur Versorgung eines Triebwerkes mit Treibstoff sowie einen Lagerring umfasst, wie er vorstehend beschrieben wurde, wobei der Kühlmittelkanal derart mit dem Treibstofftank verbunden ist, dass der Treibstoff durch den Kühlkanal fließen kann. Eine solche Lagervorrichtung bietet den Vorteil, dass auch der Treibstoff als Kühlmittel verwendbar ist, wodurch ein separates Kühlmittelkreislaufsystem nicht mehr vorzusehen ist. Auch kann durch eine solche Lagervorrichtung eine Aufwärmung des Treibstoffs erfolgen, die evtl. für eine günstige Fließeigenschaft während dem Flug in großen Höhen oder bei Kälte oder zur besseren Einstellung/Adaption der Emissionswerte benötigt wird.

Die Erfindung wird nachstehend anhand der beigefügten Zeichnungen beispielhaft näher erläutert. Es zeigt:
- Fig. 1: eine dreidimensionale Darstellung eines Ausführungsbeispiels der vorliegenden Erfindung;
- Fig. 2: eine Schnittdarstellung eines weiteren Ausführungsbeispiels der vorliegenden Erfindung;
- Fig. 3: eine Seitendarstellung eines Ausführungsbeispiels der vorliegenden Erfindung; und
- Fig. 4: ein Ablaufdiagramm eines Ausführungsbeispiels der vorliegenden Erfindung als Verfahren.

Eventuell angegebene Dimensionen und Maße sind nur exemplarisch, so dass die Erfindung nicht auf diese Dimensionen und Maße beschränkt ist. Gleiche oder ähnliche Elemente können durch gleiche oder ähnliche Bezugszeichen versehen sein, wobei auf eine wiederholte Beschreibung dieser Elemente verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden können oder sie zu weiteren, hier nicht explizit beschriebenen Kombinationen zusammengefasst werden können.

### Ausführungsformen der Erfindung

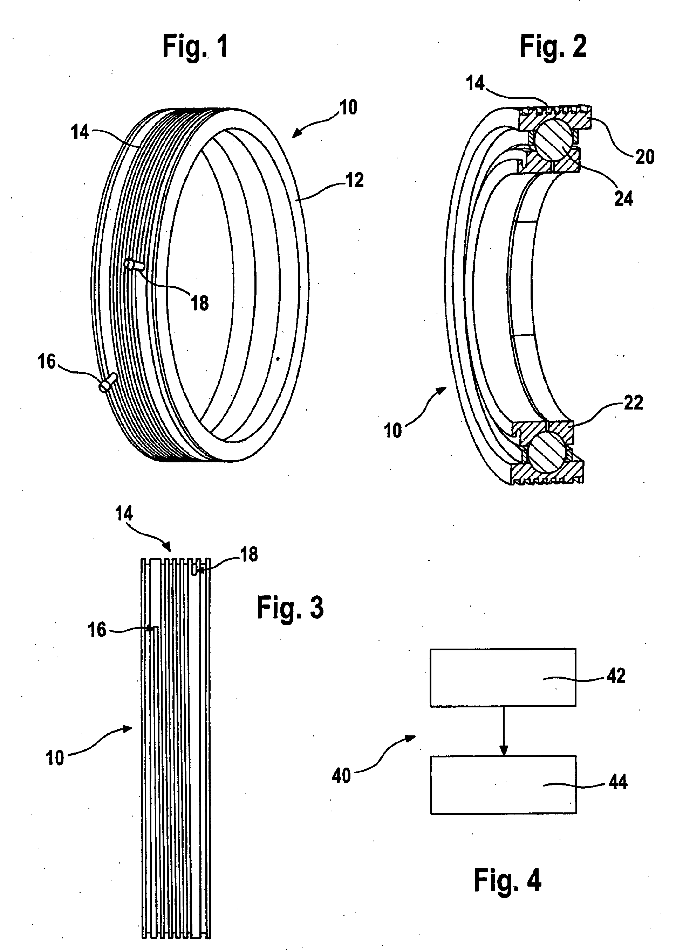

Figur 1 zeigt eine dreidimensionale Darstellung eines ersten Ausführungsbeispiels der vorliegenden Erfindung. Die dreidimensionale Darstellung zeigt einen äußeren Teil 12 eines Lagerrings 10, wobei in diesem äußeren Teil 12 ein Kühlmittelkanal 14 spiralförmig angeordnet ist. Die dreidimensionale Darstellung aus Figur 1 zeigt dabei den Kühlmittelkanal 14 in einer offenen, das heißt nicht abgedeckte Weise. Für einen Fachmann ist dabei offensichtlich, dass für den Betrieb des dargestellten Lagerrings 10 der zumindest eine Kühlmittelkanal 14 abzudecken ist, damit das Kühlmittel nicht aus dem Kühlmittelkanal 14 auslaufen kann. Weiterhin ist in Figur 1 ein Kühlmitteleinlass 16 dargestellt, durch welchen ein Kühlmittel dem Kühlmittelkanal 14 zugeführt werden kann. Das Kühlmittel fließt dann durch den spiralförmig angeordneten Kühlmittelkanal 14 und wird an dem Kühlmittelauslass 18 abgegeben.

Figur 2 zeigt eine Schnittdarstellung durch einen Lagerring 10 gemäß einem weiteren Ausführungsbeispiel der vorliegenden Erfindung. In diesem Ausführungsbeispiel umfasst der Lagerring 10 ein Außenteil 20 sowie ein Innenteil 22, welche über ein Kugellager 24 miteinander verbunden sind. Der Innenteil 22 ist zu einer Drehachse des Lagerrings 10 hin angeordnet und kann beispielsweise an einer drehbaren Nabe eines in Figur 2 nicht dargestellten Maschinenelements befestigt sein. Zur drehbaren Lagerung zwischen dem Außenteil 20 und dem Innenteil 22 können auch weitere Lagerformen wie Wälzlager, Rollenlager, Gleitlager oder Ähnliches verwendet werden, wobei die Lagerform keine wesentliche Auswirkung auf die Funktionalität der Erfindung hat.

Figur 3 zeigt eine Seitenansicht eines Ausführungsbeispiels des erfindungsgemäßen Lagerrings 10. Hierbei ist deutlich der in das Material der Außenseite des Lagerrings 10 eingebettete Kühlmittelkanal 14 ersichtlich, der einerseits eine gute Festigkeit und andererseits eine sehr gute Wärmeübertragungsmöglichkeit bietet. Ferner ist auch der Kühlmitteleinlass 16 und der Kühlmittelauslass 18 in Figur 3 dargestellt. Alternativ können auch mehrere kleinere Kühlmittelkanäle 14 um die Außenseite des Lagerrings 10 vorgesehen sein. Günstig ist es, wenn der Kühlmitteleinlass 16 und der Kühlmittelauslass 18 möglichst dicht beieinander liegen (beispielsweise bezüglich der Drehachse um nicht mehr als 45 ° gegeneinander versetzt sind), damit eine problemlose Verlegung der Anschlussleitungen ohne großen Aufwand möglich wird.

Wird nun der Lagerring 10 mit einer drehbaren Welle betrieben, so entsteht durch Rollreibung oder Gleitreibung Wärme im Lager 24, welche über das Material des Außenteils 20 an den auf der Außenseite des Lagerrings 10 angeordneten Kühlmittelkanal 14 geleitet wird. Das durch den Kühlmittelkanal 14 fließende Kühlmittel nimmt diese Wärme an der Außenseite des Lagerrings 10 auf und führt sie ab, so dass hierdurch eine Kühlung des Lagerrings 10 bewirkt wird. Zugleich kann hierdurch eine Trennung zwischen Schmiermittel und Kühlmittel erreicht werden, so dass eine Optimierung des Schmiermittels bezüglich guter Gleiteigenschaften und eine Optimierung des Kühlmittels bezüglich guter thermischer Eigenschaften möglich wird. Ein Kompromiss wie bei der Verwendung eines kombinierten Schmier-/Kühlmittels muss in diesem Fall nicht mehr eingegangen werden. Um das Schmier- bzw. Kühlmittel möglichst gut voneinander getrennt zu halten, sollte der Kühlmittelkanal 14 möglichst fluiddicht gegenüber den beweglich gelagerten Teilen abgedichtet sein.

Als Kühlmittel kann beispielsweise auch ein Kraftstoff für ein Triebwerk (beispielsweise eines Flugzeugs) verwendet werden, so dass sich durch die Verwendung des bereits vorhandenen Treibstoffkreislaufs zusätzlich für Kühlungszwecke konstruktive Vereinfachungen durch das Entfallen des Kühlkreislaufs ergeben. Zugleich kann eine Erwärmung des Treibstoffs (beispielsweise bei einem Durchfliegen von kalten Luftschichten) günstige Verbrennungseigenschaften bei der Verbrennung des Treibstoffs im Triebwerk bewirken, so dass sich günstigere Emissionswerte des Triebwerks ergeben.

Eine Außenringkühlung besteht im vorstehend dargestellten Ausführungsbeispiel somit speziell aus einem Spiralkanal, in dem Öl aus dem Triebwerkstank fließt. Die Güte der Auslegungsphilosophie besteht darin, die Wärme im Lageraußenring effektiv abzuführen. Die Kanalgeometrie sollte so bemessen sein, dass die Kriterien einer möglichst hohen Festigkeit, einer großen Wärmeübertragungsfläche sowie möglichst geringer Druckverluste erfüllt sein sollte. Diese Kriterien lassen sich unter Verwendung der folgenden Richtwerte für den (hydraulischen) Durchmesser des Kühlmittelkanals und die Länge des Spiralkanals erfüllen:
- mindestens 1,0 Millimeter für den (hydraulischen) Durchmesser des Kühlmittelkanals, und
- mindestens 2 Windungen als Länge

Figur 4 zeigt ein Ablaufdiagramm eines Ausführungsbeispiels der vorliegenden Erfindung als Verfahren. Das Verfahren 40 zum Kühlen eines Lagerrings, der eine einer Lagerringdrehachse zugewandte Innenseite und eine der Lagerringdrehachse abgewandte Außenseite aufweist, wobei an der Außenseite des Lagerrings zumindest ein Kühlmittelkanal angeordnet ist, weist einen ersten Schritt des Zuführens 42 von Kühlmittel in den Kühlmittelkanal des Lagerrings auf. In einem zweiten Schritt 44 erfolgt ein Abführen von Kühlmittel aus dem Kühlmittelkanal des Lagerrings.

## Patentansprüche

1. Lagerring (10), der eine einer Lagerringdrehachse zugewandte Innenseite und eine der Lagerringdrehachse abgewandte Außenseite aufweist, wobei an der Außenseite des Lagerrings (10) zumindest ein Kühlmittelkanal (14) angeordnet ist, wobei der Kühlmittelkanal (14) auf der Außenseite in das Material des Lagerrings (10) eingebettet ist, wobei der Kühlmittelkanal (14) spiralförmig um die Außenseite des Lagerrings (10) angeordnet ist, wobei die Außenseite des Lagerrings (10) an einem Außenring (20) und die Innenseite des Lagerrings (10) an einem Innenring (22) angeordnet sind, wobei der Außenring (20) mit dem Innenring (22) über ein Wälz-, Rollen- Kugel- oder Gleitlager (24) verbunden ist, und wobei der Kühlmittelkanal (14) einen hydraulischen Durchmesser von zumindest 1 mm und eine Gesamtlänge auf der Außenseite des Lagerrings (10) von mindestens zwei Windungen aufweist, **dadurch gekennzeichnet, dass** der Lagerring (10) einen Schmiermittelkanal zum Einleiten von Schmiermittel in das Lager aufweist, wobei der Schmiermittelkanal gegenüber dem Kühlmittelkanal (14) fluiddicht abgedichtet ist.

2. Lagerring (10) gemäß Anspruch 1, **dadurch gekennzeichnet, dass** der Kühlmittelkanal (10) eine Gesamtlänge auf der Außenseite des Lagerrings (10) aufweist, die höchstens dem 20-fachen des Durchmessers des Lagerrings (10) entspricht.

3. Lagervorrichtung, die folgende Merkmale umfasst:
- einen Treibstofftank zur Versorgung eines Triebwerkes mit Treibstoff; und
- einen Lagerring (10) gemäß Anspruch 1 oder 2, wobei der Kühlmittelkanal (14) derart mit dem Treibstofftank verbunden ist, dass der Treibstoff durch den Kühlmittelkanal (14) fließen kann.

4. Verfahren (40) zum Kühlen eines Lagerrings(10), der eine einer lagerringdrehachse zugewandte Innenseite und eine der Lagerringdrehachse abgewandte Außenseite aufweist, wobei an der Außenseite des Lagerrings (10) zumindest ein Kühlmittelkanal (14) angeordnet ist und wobei das Verfahren (40) die folgenden Schritte aufweist:
- Zuführen (42) von Kühlmittel in den Kühlmittelkanal (14) des Lagerrings (10);
- Abführen (44) von Kühlmittel aus dem Kühlmittelkanal (14) des Lagerrings (10), wobei der Kühlmittelkanal einen hydraulischen Durchmesser von zumindest 1 Millimeter und eine Länge von mindestens zwei Windungen aufweist; und
- Einleiten von Schmiermittel in den Lagerring (10) über einen Schmiermittelkanal, wobei der Schmiermittelkanal gegenüber dem Kühlmittelkanal (14) fluiddicht abgedichtet ist.

5. Verfahren nach Anspruch 4, **dadurch gekennzeichnet, dass** das Kühlmittel im Bereich des Kühlmittelkanals (14) zusätzlich zur hydraulischen Lagerdämpfung verwendet wird.

## Claims

1. A bearing ring (10) which has an inner side facing a bearing-ring rotational axis and an outer side facing away from the bearing-ring rotational axis, wherein at least one coolant channel (14) is arranged on the outer side of the bearing ring (10), wherein the coolant channel (14) is embedded in the material of the bearing ring (10) on the outer side, wherein the coolant channel (14) is arranged in a spiral form about the outer side of the bearing ring (10), wherein the outer side of the bearing ring (10) is arranged on an outer ring (20), and the inner side of the bearing ring (10) is arranged on an inner ring (22), wherein the outer ring (20) is connected to the inner ring (22) by way of a rolling, roller, ball or sliding bearing (24), and wherein the coolant channel (14) has a hydraulic diameter of at least 1 mm and a total length on the outer side of the bearing ring (10) of at least two turns, **characterised in that** the bearing ring (10) has a lubricant channel for introducing lubricant into the bearing, wherein the lubricant channel is sealed in a filuid-tight manner with respect to the coolant channel (14).

2. A bearing ring (10) according to claim 1, **characterised in that** the coolant channel (10) has a total length on the outer side of the bearing ring (10) that corresponds at most to 20 times the diameter of the bearing ring (10).

3. A bearing device that includes the following features
- a fuel tank for supplying an engine with fuel; and
- a bearing ring (10) according to claim 1 or 2, wherein the coolant channel (14) is connected to the fuel tank in such a way that the fuel can flow through the coolant channel (14).

4. Method (40) for cooling a bearing ring (10) that has an inner side facing a bearing-ring rotational axis and an outer side facing away from the bearing-ring rotational axis, wherein at least one coolant channel (14) is arranged on the outer side of the bearing ring (10), and wherein the method (40) has the following steps:
- feeding (42) coolant into the coolant channel (14) of the bearing ring (10);
- removing (44) coolant out of the coolant channel (14) of the bearing ring (10), wherein the coolant channel has a hydraulic diameter of at least 1 millimetre and a length of at least two turns; and
- introducing lubricant into the bearing ring (10) by way of a lubricant channel, wherein the lubricant channel is sealed in a fluid-tight manner with respect to the coolant channel (14).

5. Method according to claim 4, **characterised in that** the coolant is additionally used for hydraulic bearing-damping in the region of the coolant channel (14).

## Revendications

1. Bague de palier (10), qui présente un côté intérieur tourné vers un axe de rotation de bague de palier et un côté extérieur opposé à l'axe de rotation de bague de palier, au moins un canal de réfrigérant (14) étant disposé au niveau du côté extérieur de la bague de palier (10), le canal de réfrigérant (14) situé au niveau du côté extérieur étant intégré dans le matériau de la bague de palier (10), le canal de réfrigérant (14) étant disposé en spirale autour du côté extérieur de la bague de palier (10), le côté extérieur de la bague de palier (10) étant disposé au niveau d'une bague extérieure (20) et le côté intérieur de la bague de palier (10) étant disposé au niveau d'une bague intérieure (22), la bague extérieure (20) étant reliée à la bague intérieure (22) par l'intermédiaire d'un palier de roulement, d'un palier à rouleaux, d'un palier à billes ou d'un palier à glissement (24), et le canal de réfrigérant (14) présentant un diamètre hydraulique d'au moins 1 mm et une longueur totale sur le côté extérieur de la bague de palier (10) d'au moins deux spires, **caractérisée en ce que** la bague de palier (10) présente un canal de lubrifiant servant à introduire du lubrifiant dans le palier, le canal de lubrifiant étant étanchéifié de manière étanche aux fluides par rapport au canal de réfrigérant (14).

2. Bague de palier (10) selon la revendication 1, **caractérisée en ce que** le canal de réfrigérant (10) présente une longueur totale sur le côté extérieur de la bague de palier (10), laquelle correspond à 20 fois la longueur du diamètre de la bague de palier (10).

3. Dispositif de palier, comprenant les caractéristiques suivantes :
- un réservoir à carburant servant à alimenter en carburant le mécanisme moteur ; et
- une bague de palier (10) selon la revendication 1 ou 2, le canal de réfrigérant (14) étant relié au réservoir à carburant de telle manière que le carburant peut s'écouler à travers le canal de réfrigérant (14).

4. Procédé (40) servant à refroidir une bague de palier (10), qui présente un côté intérieur tourné vers l'axe de rotation de la bague de palier et un côté extérieur opposé à l'axe de rotation de la bague de palier, au moins un canal de réfrigérant (14) étant disposé au niveau du côté extérieur de la bague de palier (10) et le procédé (40) présentant les étapes suivantes consistant à :
- amener (42) du réfrigérant dans le canal de réfrigérant (14) de la bague de palier (10) ;
- évacuer (44) du réfrigérant hors du canal de réfrigérant (14) de la bague de palier (10), le canal de réfrigérant présentant un diamètre hydraulique d'au moins 1 millimètre et une longueur d'au moins deux spires ; et
- introduire du lubrifiant dans la bague de palier (10) par l'intermédiaire d'un canal de lubrifiant, le canal de lubrifiant étant étanchéifié de manière étanche aux fluides par rapport au canal de réfrigérant (14).

5. Procédé selon la revendication 4, **caractérisé en ce que** le réfrigérant est utilisé dans la zone du canal de réfrigérant (14) en plus de l'amortissement hydraulique de palier.
